(19) Europäisches Patentamt
European Patent Office
Office européen des brevets

(11) **EP 2 875 544 B1**

(12) **EUROPÄISCHE PATENTSCHRIFT**

(45) Veröffentlichungstag und Bekanntmachung des Hinweises auf die Patenterteilung:
**08.11.2017** **Patentblatt 2017/45**

(21) Anmeldenummer: **13745577.0**

(22) Anmeldetag: **15.07.2013**

(51) Int Cl.:
*H01M 8/18* (2006.01)   *D04H 1/4242* (2012.01)
*H01B 1/04* (2006.01)   *H01M 8/0234* (2016.01)
*H01M 8/0245* (2016.01)   *H01M 8/0247* (2016.01)
*D04H 1/46* (2012.01)   *D04H 1/492* (2012.01)

(86) Internationale Anmeldenummer:
**PCT/EP2013/002092**

(87) Internationale Veröffentlichungsnummer:
**WO 2014/012649 (23.01.2014 Gazette 2014/04)**

(54) **ELEKTRISCH LEITFÄHIGES FLÄCHENGEBILDE**

ELECTRICALLY CONDUCTIVE SHEET MATERIAL

STRUCTURE PLANE ÉLECTROCONDUCTRICE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2012   EP 12005313**

(43) Veröffentlichungstag der Anmeldung:
**27.05.2015   Patentblatt 2015/22**

(73) Patentinhaber: **Carl Freudenberg KG**
**69469 Weinheim (DE)**

(72) Erfinder:
• **SCHARFENBERGER, Gunter**
**67227 Frankenthal (DE)**
• **SCHÖPPING, Gerhard**
**69469 Weinheim (DE)**
• **LANGE, Birger**
**64295 Darmstadt (DE)**
• **JARRE, Gerald**
**69469 Weinheim (DE)**
• **ZAMINER, Michael**
**69469 Weinheim (DE)**
• **HALLER, Judith**
**76646 Bruchsal (DE)**

(74) Vertreter: **Ripper, Monika Sigrid et al**
**Carl Freudenberg KG**
**Höhnerweg 2 - 4**
**69469 Weinheim (DE)**

(56) Entgegenhaltungen:
WO-A1-2013/126083   WO-A2-02/31841
FR-A1- 2 592 404   JP-A- 2004 131 855
US-A1- 2011 281 169

**Beschreibung**

Die Erfindung betrifft ein elektrisch leitfähiges Flächengebilde gemäß dem Oberbegriff des Patentanspruchs 1. Die Erfindung betrifft weiter ein Verfahren zur Herstellung des elektrisch leitfähigen Flächengebildes nach den Ansprüchen 12 und 13, sowie eine Verwendung des Flächengebildes nach Anspruch 11.

Technisches Gebiet

Elektrisch leitfähige Flächengebilde, beispielsweise textile elektrisch leitfähige Flächengebilde, sind für eine Vielzahl von Anwendungen von Interesse. Einen Schwerpunkt bildet die Verwendung elektrisch leitfähiger Flächengebilde in einem Energiespeichermedium, vor allem zur Speicherung von erneuerbaren Energien, wie zum Beispiel von Wasserkraft, von Windenergie, von Solarstrahlung, von Erdwärme und zur Speicherung von Energien, die aus nachwachsenden Rohstoffen erzeugt werden.

Oftmals werden zur Speicherung der Energie die verschiedensten Arten von Batterien verwendet. Diese Batterien finden als Primär- oder Sekundärzelle, oder bei dem Elektroplattieren, bei der NaCl-Elektrolyse und der elektrolytischen Synthese anorganischer Verbindungen Anwendung. Als Primärzellen werden Batterien bezeichnet, die nach der Entladung nicht wieder neu aufgeladen werden können. Die Sekundärzellen wurden zur Speicherung überschüssiger elektrischer Energie entwickelt und sind im Hinblick auf die fossile Rohstoffknappheit und die Nutzung von erneuerbaren Energien in den Fokus von Forschung und Politik geraten. Die bekanntesten Sekundärzellen sind Nickel-Kadmium-, Bleisäure-, Lithium-Ionen- und Nickelmetallhydrid-Batterien.

Die Redox-Durchfluss-Batterie oder Redox-Flow-Zelle ist ein Akkumulator und speichert elektrische Energie in chemischen Verbindungen, wobei die Reaktionspartner in einem Lösungsmittel in gelöster Form vorliegen. Zwei energiespeichernde Elektrolytlösungen zirkulieren dabei in zwei getrennten Kreisläufen, zwischen denen in der Zelle, mittels einer Membran, der Ionenaustausch erfolgt. Die energiespeichernden Elektrolytlösungen werden außerhalb der Zelle in getrennten Tanks gelagert und Energiemenge, sowie Leistung können unabhängig voneinander skaliert werden. Die Tanks können einfach und manuell befüllt werden. Durch den Austausch der Elektrolytlösungen können diese auch in getrennten Batterien geladen und entladen werden. Die Zellenspannung liegt üblicherweise zwischen 1,0 und 2,2 V. Dies gilt insbesondere für Vanadium-Redox-Flow-Batterien.

Die Redox-Flow- Zelle wird durch eine Membran in zwei Halbzellen geteilt. Die Membran ist für die Gegenionen der Elektrolytlösungen durchlässig und jede Halbzelle wird durch eine Elektrode abgegrenzt, an der die chemische Reaktion, Reduktion oder Oxidation, abläuft.

Üblicherweise werden als Membran mikroporöse Separatoren, die alle Ionen passieren lassen, oder selektive Anionen- oder Kationentauschermembranen eingesetzt. Die Membran soll die Vermischung der beiden Elektrolytlösungen verhindern.

Im Allgemeinen bestehen die Elektroden, welche für einen hohen elektrochemischen Spannungsbereich in wässrigen Lösungen tauglich sein sollen, meistens aus Graphit. Für eine möglichst hohe spezifische Leistung werden als Elektrodenmaterial Graphitfilze mit einer hohen spezifischen Oberfläche eingesetzt.

Aus der JP 4632043 B2 ist ein Karbon-Faserfilz bekannt, das durch Karbonisierung von oxidierten Polyacrylnitril (PAN-OX)-Fasern erhalten wurde, wobei durch Vernadeln ein Filz hergestellt werden kann. Aufgrund der Faserstruktur, des in der JP 4632043 B2 beschriebenen Filzes, sind Faser- und Leitungsausrichtung unterschiedlich zueinander orientiert. Infolgedessen muss der Strom eine Vielzahl von Knotenpunkten der Fasern passieren, wodurch der elektrische Widerstand des Filzes deutlich erhöht wird.

In der JP 2003 308851 A wird als Elektrodenmaterial ein Vliesstoff beschrieben, der kohlenstoffhaltige Fasern aufweist. Die Herstellung erfolgt bei hohen Temperaturen und unter inerter Atmosphäre. Ferner sind die Porosität und somit auch der Druckverlust aufgrund der Filzstruktur begrenzt.

In der JP 2001 085028 A wird ein Kohlenstoff-Elektrodenmaterial zur Anwendung in einer Redox-Durchflussbatterie in wässrigen Elektrolytsystemen gezeigt.

Die in der JP 2003 308851 A und der JP 2001 085028 A beschriebenen Elektrodenmaterialien weisen keine gezielten Strukturen auf, wodurch das Durchströmen mit einem Fluid, insbesondere einer Elektrolytlösung, erschwert wird. Dies führt zu einem erhöhten elektrischen Widerstand und einem hohen Druckverlust, während des Durchströmens des Elektrodenmaterials. Desweiteren besitzen die zuvor genannten Elektrodenmaterialien eine raue Oberfläche, die bei Kontakt mit einer Bipolarplatte den elektrischen Widerstand erhöht. Eine hohe Faserunregelmäßigkeit dieser Materialien verstärkt den Abrieb, wodurch die Lebensdauer dieser Elektrodenmaterialien begrenzt ist. Aus der DE 100 505 12 A1 wird ein leitfähiger Vliesstoff, welcher Karbonfasern enthält beschrieben. Dieser Vliesstoff weist Dicken von 80 bis 500 µm auf. Gefaltete Flächengebilde sind aus den Druckschriften FR 2 592 404 A1 und JP 2004 131 855 A bekannt.

Darstellung der Erfindung

Der Erfindung liegt daher die Aufgabe zugrunde, ein elektrisch leitfähiges und flexibles Flächengebilde bereitzustellen, das einen geringen elektrischen Widerstand aufweist, sowie auf möglichst einfache Art und Weise großtechnisch möglichst kostengünstig und möglichst reproduzierbar hergestellt werden kann.

Diese Aufgabe wird durch die Merkmale des Patentanspruchs 1 gelöst. Erfindungsgemäß ist erkannt worden, dass ein Flächengebilde, dessen Grundkörper Kanäle aufweist, zu einem verbesserten Durchströmen eines Fluids durch das Flächengebilde führt. Gleichzeitig sind der Strömungswiderstand und der Druckverlust gering. Ferner konnte festgestellt werden, dass das Flächengebilde unter technischem Einsatz eine hervorragende Leistung über einen möglichst langen Zeitraum besitzt.

Das Flächengebilde weist in einer bevorzugten Ausführungsform Kanaldurchmesser auf, die im Bereich von 1 bis 500 $\mu$m liegen, bevorzugt im Bereich von 5 bis 400 $\mu$m, insbesondere im Bereich von 10 bis 300 $\mu$m. Besonders bevorzugt ist ein Flächengebilde mit einem Kanaldurchmesser im Bereich von 50 bis 200 $\mu$m. Vorteilhaft sind durch diese Größen der Kanaldurchmesser an der Oberfläche genügend Reaktionsstellen vorhanden, die bei Einsatz des Flächengebildes als Elektrodenmaterial einen hervorragenden Austausch an Elektronen zwischen den Elektrolytlösungen und dem Elektrodenmaterial ermöglichen. Infolgedessen kann die elektrische Leitfähigkeit des Flächengebildes deutlich erhöht werden. Der Kanaldurchmesser des Flächengebildes wird mittels Rasterelektronenmikroskopie bestimmt. Hierzu wird ein Elektronenstrahl in einem bestimmten Muster über den Querschnitt eines Flächengebildes geführt (gerastert) und die resultierenden Wechselwirkungen der Elektronen mit der Probe werden zur Erzeugung eines Bildes der Probe genutzt. Die auf dem Bild erhaltenen Kanäle werden anschließend entsprechend des Vergrößerungsfaktors bestimmt.

Besonders bevorzugt sind Flächengebilde, deren Grundkörper eine erste und eine zweite Frontalebene umfasst, wobei die Kanäle orthogonal zu den Frontalebenen angeordnet sind. Vorteilhaft an einer solchen Kanalanordnung ist, dass die Kanäle besonders gleichmäßig durchströmt werden können und der elektrische Widerstand gleichzeitig verringert werden kann.

Gemäß einer weiteren bevorzugten Ausführungsform umfasst der Grundkörper des Flächengebildes eine erste und eine zweite Frontalebene, wobei die Kanäle mit den Frontalebenen einen spitzen Winkel bilden. Durch eine solche Kanalstruktur wird vorteilhafterweise ein Flächengebilde mit einer Vielzahl an Kanälen erreicht. Ferner weist ein solches Flächengebilde aufgrund eines gleichmäßigen Durchströmens einen geringen Druckverlust auf.

Das Flächengebilde weist in einer weiteren bevorzugten Ausführungsform eine faltenartige Struktur auf, wobei deren Faltenränder zumindest teilweise miteinander verbunden sind. Durch das teilweise Verbinden an den Faltenrändern wird die Stabilität des Flächengebildes deutlich erhöht. Ferner wird das Ausfransen der Fasern in Faserrichtung verhindert, welches vorteilhafterweise die Lebensdauer des Flächengebildes erhöht.

Als besonders zweckmäßig hat sich das Verbinden der Faltenränder miteinander mindestens auf einer Seite des Grundkörpers durch Verwirken, Verweben und/oder Nadelverfestigung erwiesen. Durch die unterschiedlichen Möglichkeiten zum Verbinden der Faltenränder kann die Stabilität des Flächengebildes beeinflusst werden, wodurch eine vielseitige Verwendung des Flächengebildes erzielt werden kann. Ein weiterer Vorteil des unterschiedlichen Verbindens ist, dass das stabile Flächengebilde gleichzeitig noch flexibel in Längs- und Querrichtung ist.

Das Verfestigen kann mechanisch erfolgen. Hierzu verwendet man entweder eine Nadeltechnik oder ein Verschlingen der Fasern mittels Wasser- bzw. Dampfstrahlen.

Das Flächengebilde könnte plissiert und zu einem Block zusammengefaltet sein. Aufgrund dieser Struktur sind die einzelnen Fasern des Flächengebildes in Richtung der Leitungsrichtung orientiert, wodurch der elektrische Widerstand verringert wird. Ferner werden durch die Kanalstruktur der Strömungswiderstand und der Druckverlust deutlich verringert.

Je nach Art und Weise des Faltens könnte das Flächengebilde unterschiedliche Dicken in einem Bereich von 1 bis 15 mm aufweisen. Besonders bevorzugt sind Dicken im Bereich von 3 bis 12, insbesondere im Bereich von 5 bis 10 mm.

Dies ermöglicht den Einsatz eines maßgeschneiderten stabilen Flächengebildes im Hinblick auf die unterschiedlichsten Anwendungen. Die Bestimmung der Dicke des Flächengebildes erfolgte gemäß DIN EN ISO 9073-2.

Praktische Versuche haben gezeigt, dass eine besonders hohe elektrische Leitfähigkeit bei einer Porosität von 40 bis 95 %, bevorzugt von 60 bis 90 %, besonders bevorzugt von 70 bis 80 %, erzielt werden kann. Durch weitere Versuche hat sich herausgestellt, dass besonders geringe Strömungswiderstände bei einer Porosität im Bereich von 80 bis 99 %, besonders bevorzugt im Bereich von 85 bis 97 %, insbesondere im Bereich von 90 bis 95 %, erreicht werden können. Unter Porosität wird das Verhältnis von Hohlraumvolumen zu Gesamtvolumen eines Stoffes oder Stoffgemisches verstanden. Sie dient als klassifizierendes Maß für die tatsächlich vorliegenden Hohlräume. Vorteilhafterweise ist der Strömungswiderstand in diesen Porositätsbereichen relativ gering. Ein Flächengebilde mit einer hohen Porosität hat den Vorteil, dass eine Vielzahl an Reaktionsstellen vorhanden ist, die einen hervorragenden Austausch an Elektronen zwischen den Elektrolytlösungen und dem Elektrodenmaterial ermöglichen.

Die Porosität wurde wie folgt aus drei Wägungen bestimmt: Hierzu wurde das Flächengebilde für 24 Stunden bei 80 °C unter Vakuum getrocknet. Das Wiegen des getrockneten Flächengebildes erfolgte mehrmals bis ein konstanter Wert erreicht wurde. Anschließend wurden die Proben unter Vakuum mit destilliertem Wasser gesättigt und im Exsikkator solange mit Wasser befüllt, bis das Flächengebilde vollständig mit diesem bedeckt ist. Nach einer Ruhezeit von 72 Stunden wurden die Tauchwägungen durchgeführt. Hierzu werden die nassen Proben mittels einer Probenhalterung in einen mit destilliertem Wasser gefüllten Behälter gegeben und anhand des verdrängten Wassers wird das Gewicht der nassen Probe bestimmt. Zusätzlich wurde das Gewicht der nassen Probe ermittelt. Die Porosität n wurde dann nach folgender Formel bestimmt.

$$n = \frac{G_{Nasswägung} - G_{Trockenwägung}}{G_{Nasswägung} - G_{Tauchwägung}}$$

In einer weiteren Ausführungsform kann das Flächengebilde Faserschichten mit unterschiedlicher Porosität aufweisen. Dieser progressive Aufbau begünstigt den Elektrolyttransport.

Besonders bevorzugt ist ein Flächengebilde mit einer elektrischen Leitfähigkeit von 10 bis 300 $S/cm^2$, bevorzugt von 50 bis 250 $S/cm^2$, besonders bevorzugt von 100 bis 200 $S/cm^2$ senkrecht zu den Deckebenen, welche orthogonal zu den Frontalebenen angeordnet sind. Aufgrund dieser elektrischen Leitfähigkeitswerte eignet sich das Flächengebilde besonders zur Verwendung in Energiespeichereinheiten.

Die elektrische Leitfähigkeit kann nicht direkt gemessen werden, sondern wird meist mittels Transportmessungen aus Strom, abfallender Spannung und Probengeometrie analog zum spezifischen Widerstand bestimmt. Die elektrische Leitfähigkeit ist der reziproke Widerstand. Zur Bestimmung der elektrischen Leitfähigkeit des Flächengebildes wurde eine Probe unter Vorspannung mittels zwei Klemmen befestigt und an zwei Stellen versilbert. An diesen Stellen werden die Klemmen befestigt und der Widerstand wird mit einem Widerstandsmessgerät ermittelt. Der Abstand zwischen den beiden Klemmen betrug ca. 100 mm. Der bestimmte Widerstand kann anschließend in die Leitfähigkeit umgerechnet werden.

Gemäß einer alternativen Ausführungsform der Erfindung kann das Flächengebilde eine elektrische Leitfähigkeit im Bereich von 5 bis 300 $S/cm^2$, vorzugsweise im Bereich von 10 bis 150 $S/cm^2$, insbesondere im Bereich von 15 bis 50 $S/cm^2$, aufweisen, gemessen bei einer Dichte von 350 $kg/m^3$ bei einer Temperatur im Bereich von 20 bis 22 °C und bei einem von Druck 1013 mbar nach der nachfolgenden Methode:

Die Dichte wird aus dem Flächengewicht und der Dicke der entnommenen Probe bestimmt, wobei die Dicke in Abhängigkeit vom aufgebrachten Druck bestimmt wird.

Die Bestimmung der elektrischen Leitfähigkeit erfolgt galvanostatisch. Hierzu wird der elektrische Widerstand mittels einer 2-Punkt-Widerstandsmessung ermittelt.

Es wird eine ringförmige Probe mit einem inneren Durchmesser von 45 mm und einem äußeren Durchmesser von 56 mm entnommen. Dies entspricht einer Probenfläche von 8,73 $cm^2$. Danach wird die entnommene Probe auf eine untere Ringelektrode zentrisch aufgelegt. Anschließend wird eine obere Elektrode auf die untere Elektrode aufgelegt, so dass sich die entnommene Probe zwischen beiden Elektroden befindet. Es wird ein Strom von 1 A vorgegeben. Dieser fließt zunächst durch die untere Elektrode und anschließend durch die obere Elektrode. Danach wird der Spannungsabfall zwischen den beiden Elektroden mit einem Potentiometer gemessen. Anschließend wird der elektrische Widerstand R nach folgender Formel berechnet:

$$R = \frac{U}{I}$$

Der berechnete Durchgangswiderstand bezieht sich auf die Fläche des Probenkörpers. Durch Kehrwertbildung des elektrischen Widerstands wird die elektrische Leitfähigkeit erhalten.

Bei dem elektrisch leitfähigen Flächengebilde könnten als Ausgangsstoff für die karbonisierten Fasern Polyester- und/oder Polypropylenfasern, Polyacrylnitril-Fasern (PAN), Cellulosefasern, Pech-Fasern, Lignin-Fasern und/oder Phenolharzfasern eingesetzt werden.

Als Fluid könnten die unterschiedlichsten Elektrolytlösungen verwendet werden. Üblicherweise enthält die Elektrolytlösung ein lösliches Salz und Lösungsmittel. Die Zusammensetzung der Elektrolytlösungen, bzw. deren Konzentration, bestimmt maßgeblich mit der Zellspannung die Energiedichte. Beispielsweise werden in einer Redox-Durchfluss-Zelle saure wässrige Lösungen von Eisenchlorid und Chromchlorid in Chlorwasserstoffsäure, Eisenchlorid und Titanchlorid in Chlorwasserstoffsäure oder Methansulfonsäure verwendet. Denkbare weitere Redoxpaare sind Cer, Zink oder Brom. Bevorzugt ist der Einsatz wässrig saurer Lösungen aus Schwefelsäure und Vanadium.

Das Flächengebilde könnte Flächengewichte von 100 bis 1000 $g/m^2$ aufweisen. Bevorzugt kommen Flächengebilde mit einem Flächengewicht von 300 bis 800 $g/m^2$ zum Einsatz, insbesondere sind Flächengewichte von 400 bis 700 $g/m^2$ bevorzugt. Ganz besonders bevorzugt liegt das Flächengewicht im Bereich von 200 bis 500 $g/m^2$, insbesondere im Bereich von 250 bis 400 $g/m^2$. Ein Flächengebilde mit solchen Flächengewichten verfügt über eine ausgezeichnete Stabilität und hohe Festigkeit. Die Bestimmung des Flächengewichts erfolgte gemäß der DIN EN 12127.

Gemäß einer bevorzugten Ausführungsform wird das Flächengebilde durch ein Faltenbildungsverfahren hergestellt. Zur Faltenbildung könnte ein Kunit-, OptiKnit®-, MaliKnit- oder MultiKnit®-Maschenbildungsverfahren zum Einsatz kommen. Beim Kunit-Maschenbildungsverfahren wird aus einem Faserflor mit einer längsorientierten Faserlage ein Vliesgewirke gebildet, das einseitig maschenverfestigt ist. Mittels eines MultiKnit®-Maschenbildungsverfahrens werden Flächengebilde mit einer Verbundstruktur hergestellt, bei welcher der Faserflor eine längsorientierte Faserlage aufweist und beidseitig maschenverfestigt ist. Beim MaliKnit-Maschenbildungsverfahren wird aus einem Faserflor mit einer querorientierten Faserlage ein Vliesgewirke gebildet, das einseitig maschenverfestigt ist. Ein durch ein OptiKnit®-Maschenbildungsverfahren hergestelltes Flächengebilde besteht aus einem Faserflor mit längsorientierter Faserlage und aus einem Faserflor mit querorientierter Faserlage, wobei diese beidseitig maschenverfestigt sind. Weiterhin könnte das Flächengebilde durch Plissieren hergestellt werden. Zunächst wird die gewünschte Form und Größe durch Zuschneiden eines Faserflors erhalten und anschließend gebügelt. Als nächstes folgt das Plissieren, also das Falten. Dies kann mittels einer Plissiermaschine oder manuell erfolgen. Die Falten werden durch Wärmebehandlung fixiert und anschließend maschinell vernäht. Durch diese speziellen Herstellungsverfahren können die unterschiedlichen Kanalstrukturen im Grundkörper des Flächengebildes realisiert werden. Weiterhin kann durch das Faltenbildungsverfahren ein voluminöses und weiches Flächengebilde hergestellt werden. Ferner zeichnen sich die Flächengebilde durch gute mechanische Eigenschaften und ausgezeichnete Abriebbeständigkeit aus.

Für manche Anwendungen des Flächengebildes ist es zweckmäßig, die Oberflächenenergie des Flächengebildes durch Corona- und/oder Plasmabehandlung zu erhöhen. Dabei erfolgt die Corona- oder Plasmabehandlung vorzugsweise derart, dass der Oberfläche eine Oberflächenenergie gemäß ISO 9000 von mehr als 38 dyn, vorzugsweise 38 bis 72 dyn, insbesondere 40 bis 60 dyn, verliehen wird. Hierbei ist vorteilhaft, dass die Oberfläche hydrophil oder hydrophob ausgerüstet werden kann, ohne Chemikalien beizumengen.

Des Weiteren kann das Flächengebilde einer Veredelung chemischer Art unterzogen werden, wie beispielsweise einer Hydrophilierung.

Gemäß einer bevorzugten Ausführungsform umfasst die Anordnung ein Flächengebilde und eine elektrische Quelle, wobei zwischen einer ersten Halbzelle und einer zweiten Halbzelle eine Leitungsrichtung besteht, längs derer die Fasern ausgerichtet sind. Vorteilhafterweise weist eine derartige Anordnung einen geringen elektrischen Widerstand auf.

Die vorliegende Erfindung umfasst auch ein Verfahren nach Anspruch 12 zur Herstellung eines elektrisch leitfähigen Flächengebildes, umfassend die folgenden Verfahrensschritte:

a) Bereitstellen mindestens eines Faserflors,
b) Vorverfestigen des Faserflors,
c) Erzeugen einer faltenartigen Struktur, sowie Verbinden von Faltenrändern unter Ausbildung des Flächengebildes, und
d) Karbonisieren und/oder Graphitisieren des Flächengebildes.

Das erfindungsgemäße Verfahren besitzt den Vorteil, dass neben einem Flächenbildungsverfahren keine weiteren Arbeitsschritte zur Integration eines elektrisch leitfähigen Materials und keine zusätzlichen stabilisierenden Maßnahmen zur Erhöhung der Festigkeit des Flächengebildes erforderlich sind. Weiterhin kann mit dem Verfahren ein voluminöses Flächengebilde hergestellt werden.

Für das Herstellen des Faserflors können die an sich bekannten Technologien eingesetzt werden. Für den schwach vorgebundenen Faserflor mit moderaten Festigkeiten können kostengünstige Faserrohstoffe eingesetzt werden.

Der Faserflor kann mechanisch durch Verschlingen der Fasern vorverfestigt werden. Hierzu verwendet man entweder eine Nadeltechnik oder ein Verschlingen mittels Wasser- bzw. Dampfstrahlen. Bei der Vernadelung erhält man ein weicheres Flächengebilde mit einem niedrigeren Flächengewicht. Besonders bevorzugt wird der Faserflor mittels eines Niederdruck-Wasserstrahlverfahrens vorverfestigt. Die Wasserstrahlverfestigung kann bei Temperaturen im Bereich von 10 bis 40 °C stattfinden. Eine Vorverfestigung kann auch mittels Hochdruck-Wasserstrahlen bei Drücken im Bereich von 100 bis 300 bar erfolgen.

Die Faltenränder können auf mindestens einer Seite durch Verwirken, Verweben und/oder Verfestigung miteinander verbunden sein. Denkbar ist auch eine Verfestigung mittels hochenergetischer Wasserstrahlen bei Drücken im Bereich von 100 bis 300 bar. Hierbei werden die Fasern verwirbelt und miteinander verbunden.

Zum Verdichten des Flächengebildes könnte dieses mittels eines Kalanders auf circa 50 bis 90 % seiner Ausgangsdicke verdichtet werden.

Die Karbonisierung und/oder Graphitisierung könnte unter Schutzgasatmosphäre bei einer Temperatur im Bereich von 800 bis 2500 °C erfolgen.

Die Erfindung umfasst ein weiteres Verfahren nach Anspruch 13 zur Herstellung eines elektrisch leitfähigen Flächengebildes, umfassend die folgenden Verfahrensschritte:

a) Bereitstellen mindestens zweier Faserflore, wobei die Faserorientierungen der Faserflore unterschiedliche Vorzugsrichtungen aufweisen,
b) Übereinanderlegen der Faserflore zur Erzeugung eines Verbunds,
c) Vorverfestigen der Faserflore,
d) Erzeugen einer faltenartigen Struktur, sowie Verbinden von Faltenrändern unter Ausbildung des Flächengebildes, und
e) Karbonisieren und/oder Graphitisieren des Flächengebildes.

Hierbei ist vorteilhaft, dass durch den Einsatz mindestens zweier Faserflore mit unterschiedlicher Faserausrichtung ein Flächengebilde mit erhöhter Höchstzugkraft in Querrichtung erhalten werden kann.

Ferner kann mit dem erfindungsgemäßen Verfahren ein dünnes aber trotzdem sehr stabiles und festes Flächengebilde auf einfache und kostengünstige Art und Weise hergestellt werden.

Das Ablegen der Faserflore kann auf die unterschiedlichsten Weisen erfolgen. Denkbar sind Wirrlegung (Random-Technologie) oder Kombinationen aus Längs- und/oder Querlegung, wenn spezielle Eigenschaften des Flächengebildes ermöglicht werden sollen bzw. wenn die Faserstruktur einen mehrlagigen Aufbau besitzen soll.

In einer weiteren Ausführungsform erfolgt die Ausrüstung des Flächengebildes durch Funktionalisierung, Beschichtung und/oder Imprägnierung. Unter einer Ausrüstung wird im Rahmen dieser Erfindung eine kurzzeitige oder dauerhafte, thermische, chemische und/oder physikalische Veränderung des Flächengebildes verstanden, die diesem bestimmte Gebrauchseigenschaften, wie beispielsweise gute Benetzbarkeit, erhöhte elektrische Leitfähigkeit und erhöhte Porosität, vermittelt.

Die Funktionalisierung der Oberfläche des Flächengebildes kann thermisch, chemisch und/oder physikalisch erfolgen. Diese dient zur Veränderung der chemischen Oberflächenstruktur des Flächengebildes, insbesondere zur Erzeugung von Carbonsäure-, Carbonyl- und Aldehydgruppen auf der Oberfläche des Flächengebildes. Bei einer chemischen Funktionalisierung wird die Oberfläche des Flächengebildes durch Behandeln mit Säure, Corona- und/oder Plasmabehandlung verändert. Hierbei wird die Benetzbarkeit, die elektrische Leitfähigkeit die Porosität sowie die Hydrophilie des Flächengebildes erhöht.

Mittels Imprägnierung wird die Benetzbarkeit, die elektrische Leitfähigkeit und die Porosität des Flächengebildes erhöht. Das Imprägnieren geschieht durch einstufiges oder mehrstufiges Foulardieren, wobei eine exakt definierte Wirkstoffmenge gleichmäßig je m$^2$ Textilgut aufgebracht wird. Beim Foulardieren wird eine Flotte durch Walzendruck in ein Gewebe gepresst. Der Begriff Flotte bezeichnet dabei stets die Gesamtheit aller ihrer Komponenten, d.h. das Lösungsmittel (meist Wasser) sowie alle darin enthaltenen gelösten, emulgierten oder dispergierten Bestandteile wie Farbstoffe, Partikel, Pigmente, Chemikalien und Hilfsmittel. Das Eindringen der Imprägniermittel in Form von Lösungen oder Emulsionen der betreffenden Wirkstoffe könnte durch Zugabe von Netzmitteln erleichtert werden, welche die Oberflächenspannung herabsetzen.

Durch Beschichtung könnte die Oberfläche des Flächengebildes mit Partikeln versehen werden. Als Partikel könnten leitfähige Kohlenstoffmaterialen, wie zum Beispiel Leitruss oder Graphit, eingesetzt werden. Die Partikel werden vorzugweise als Paste auf das Flächengebilde aufgetragen. Besonders bevorzugt ist das Auftragen einer wässrigen Paste auf die Oberfläche des Flächengebildes. Das Auftragen könnte beispielsweise durch Aufsprühen, Rakeln, Foulardieren oder Kisscoating erfolgen.

Beim Kisscoating wird eine Druckwalze mit glatter Oberfläche oder mit geätzten, maschinell bearbeiteten oder gerändelten Vertiefungen auf der Oberfläche verwendet. Die Paste wird von der Druckwalze auf das zu beschichtende Flächengebilde übertragen. Die Vertiefungen können jede beliebige Größe oder Form haben und diskontinuierlich oder kontinuierlich auf der Oberfläche der Druckwalze verteilt sein. Ferner kann durch die Beschichtung die Oberfläche des Flächengebildes sowie die mechanische Stabilität deutlich erhöht werden. Weiterhin kann das Benetzungsverhalten durch die Zugabe der Partikel erhöht werden.

Die Ausrüstung oder Behandlung der Flächengebilde dient einerseits dem Schutz der Oberfläche oder Faser, deren Eigenschaftsverbesserung und/oder Eigenschaftsveränderungen oder der Erzielung neuer Eigenschaftsprofile. Hierbei ist vorteilhaft, dass die Oberfläche des Flächengebildes auf einfache und kostengünstige Art und Weise ausgerüstet werden kann. Dies ermöglicht einen vielseitigen Einsatz des Flächengebildes.

Ferner könnte als Ausgangstoff für das Flächengebilde ein Gemisch aus den zuvor genannten karbonisierten Fasern und Polyvinylalkohol(PVA)-Fasern verwendet werden. Das Erzeugen des elektrisch leitfähigen Flächengebildes erfolgt nach den erfindungsgemäßen Verfahren. Zusätzlich könnte der Kanaldurchmesser in einem weiteren Verfahrensschritt modifiziert werden. Hierzu werden vor dem Karbonisieren und/oder Graphitisieren des Flächengebildes die Polyvinylalkohol(PVA)-Fasern aus dem Flächengebilde herausgelöst. Das Herauslösen der Polyvinylalkohol(PVA)-Fasern erfolgt durch Zugabe von Wasser. Anschließend wird das Flächengebilde mit oder ohne einen Spannrahmen getrocknet. Das nun erhaltene Flächengebilde wird im nächsten Verfahrensschritt karbonisiert und/oder graphitisiert. Hierbei ist vorteilhaft, dass durch die Modifizierung des Flächengebildes der Kanaldurchmesser auf einfache Art und Weise erhöht werden kann. Ferner zeichnet sich das Flächengebilde durch eine hervorragende Porosität aus.

Desweiteren könnten Fasern thermisch während des Karbonisierens und/oder Graphitisierens herausgelöst werden. Hierbei ist vorteilhaft, dass durch das Entfernen der Fasern die Porosität des Flächengebildes erhöht werden kann.

Das thermische Entfernen kann den Verfahrensschritt des Brennens bzw. des Herausbrennens umfassen.

Das elektrisch leitfähige Flächengebilde könnte in einer Energiespeichereinheit verwendet werden. Hierbei ist vorteilhaft, dass das Flächengebilde hohe Wirkungsgrade und eine hohe Lebenserwartung aufweist. Ferner zeichnet sich das Flächengebilde durch eine exzellente Resistenz unter korrosiven Bedingungen aus.

Schließlich könnte das elektrisch leitfähige Flächengebilde als Redox-Flow-Elektrode verwendet werden. Diese finden weitverbreitet in stationären Anwendungen ihren Einsatz aufgrund ihrer Leistungen von einem Kilowatt bis zu mehreren Megawatt. Sie können als Netzstabilisatoren, als Pufferspeicher für erneuerbare Energien, insbesondere als Speicher zur unterbrechungsfreien Stromversorgung, und als dezentrale Energieversorgungseinheit eingesetzt werden. Das Flächengebilde eignet sich aufgrund seines hohen Wirkungsgrades hervorragend als Redox-Flow-Elektrode. Ferner hat die Verwendung des Flächengebildes in einer Redox-Flow-Elektrode den Vorteil, dass das Elektrodenmaterial unverändert bleibt.

In einer weiteren Ausführungsform kann die Redox-Flow-Elektrode aus mehreren Flächengebildeschichten aufgebaut sein, wodurch die Elektrodenfläche erhöht werden kann.

Beispielsweise kann das Flächengebilde in einem Vanadium-Redox-Akkumulator als Reservequelle für Mobilfunk-Basisstationen oder Pufferbatterie für Windkraftanlagen eingesetzt werden. Diese Anlagen können zehn Stunden lang mit einer Leistung von sechs Megawatt genügend Strom liefern.

Weitere denkbare Einsatzgebiete des Flächengebildes ist die Verwendung in Lithium-Metall-Polymer-Batterien, Lithium-Ionen-Batterien und Doppelschichtkondensatoren.

Denkbar ist auch die Verwendung des Flächengebildes als Gasdiffusionsschicht aufgrund seiner elektrischen Leitfähigkeit und seiner kanalartigen Struktur.

Kurzbeschreibung der Zeichnung

In der Zeichnung zeigen

Fig. 1     ein Flächengebilde, welches im Grundkörper Kanäle aufweist,

Fig. 1a     ein weiteres Flächengebilde, welches Kanäle im Grundkörper aufweist,

Fig. 2     ein Flächengebilde mit Kanälen im Grundkörper, sowie bildlich dargestellte einzelne Verfahrensschritte zur Herstellung des Flächengebildes,

Fig. 3     eine schematische Darstellung einer Redox-Flow-Zelle und

Fig. 4     eine schematische Anordnung einer elektrolytischen Zelle.

Ausführung der Erfindung

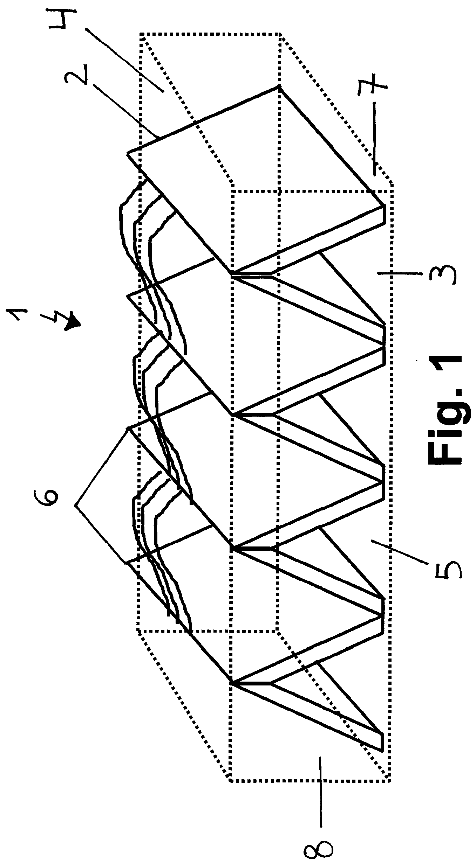

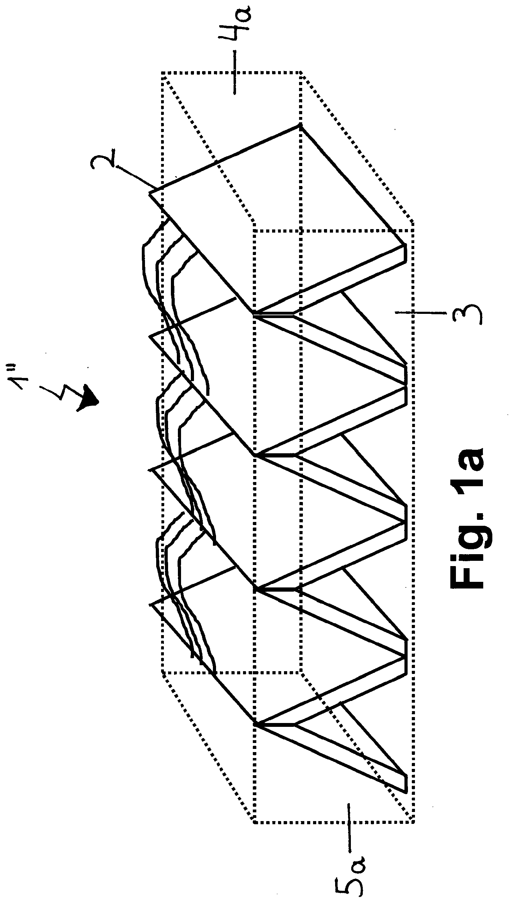

Fig. 1 zeigt ein elektrisch leitfähiges Flächengebilde 1, umfassend einen Grundkörper 2, enthaltend Fasern, wobei mindestens ein Teil der Fasern Karbonfasern aufweist. Im Grundkörper 2 sind Kanäle 3 ausgebildet.

Alle Fasern sind karbonisiert.

Die Kanäle 3 sind im Querschnitt dreieckförmig.

Das Flächengebilde 1 zeigt einen Kanaldurchmesser im Bereich von 1 bis 500 $\mu$m. Bei diesem Flächengebilde 1 weisen die Kanäle 3 einen Durchmesser

von 250 $\mu$m auf.

Ferner umfasst der Grundkörper 2 eine erste Frontalebene 4 und eine zweite Frontalebene 5, wobei die Kanäle 3 mit den Frontalebenen 4, 5 einen spitzen Winkel bilden. In diesem konkreten Fall beträgt der Winkel weniger als 10 °. Weiterhin weist das Flächengebilde 1 eine faltenartige Struktur auf, wobei deren Faltenränder 6 zumindest teilweise miteinander verbunden sind. Die Faltenränder 6 sind nur auf einer Seite verbunden.

Das Verbinden der Faltenränder 6 miteinander mindestens auf einer Seite des Grundkörpers 2 erfolgt durch Verwirken, Verweben und/oder Verfestigung. Die Faltenränder 6 sind durch Nadelverfestigung auf der Seite der Frontalebene 4 miteinander verbunden.

Das Flächengebilde 1 zeigt eine Dicke von 1 bis 15 mm. Das in der Figur 1 abgebildete Flächengebilde 1 weist eine Dicke von 5 mm auf.

Die Porosität beträgt 40 bis 95 %. Das Flächengebilde 1 in Figur 1 zeigt konkret eine Porosität von 80 %.

Die elektrische Leitfähigkeit senkrecht zu Deckebenen 7, 8, welche orthogonal zu den Frontalebenen 4, 5 angeordnet sind, liegt im Bereich von 10 bis 300 S/cm$^2$.

Das Flächengebilde 1 weist Flächengewichte im Bereich von 100 bis 1000 g/m$^2$ auf. Das Flächengewicht des Flächengebildes 1 der Figur 1 beträgt 500 g/m$^2$.

Ferner ist das Flächengebilde 1 durch ein Faltenbildungsverfahren hergestellt worden, in diesem konkreten Fall durch ein Kunit-Maschenbildungsverfahren.

Die Herstellung des elektrisch leitfähigen Flächengebildes 1 umfasst die folgenden Verfahrensschritte:

    a) Bereitstellen mindestens eines Faserflors,

    b) Vorverfestigen des Faserflors,

    c) Erzeugen einer faltenartigen Struktur, sowie Verbinden von Faltenrändern 6 unter Ausbildung des Flächengebildes 1, und

    d) Karbonisieren und/oder Graphitisieren des Flächengebildes 1.

Der Faserflor wird mittels eines Niederdruck-Wasserstrahlverfahrens vorverfestigt. Die Wasserstrahlverfestigung findet bei Temperaturen im Bereich von 10 bis 40 °C statt.

Die Karbonisierung und/oder Graphitisierung erfolgt unter Schutzgasatmosphäre bei 800 bis 2500 °C.

Fig. 1a zeigt ein elektrisch leitfähiges Flächengebilde 1 ", umfassend einen Grundkörper 2, enthaltend Fasern, wobei mindestens ein Teil der Fasern Karbonfasern aufweist. Im Grundkörper 2 sind Kanäle 3 ausgebildet.

Der Grundkörper 2 umfasst eine erste Frontalebene 4a und eine zweite Frontalebene 5a, wobei die Kanäle 3 orthogonal zu den Frontalebenen 4a, 5a angeordnet sind.

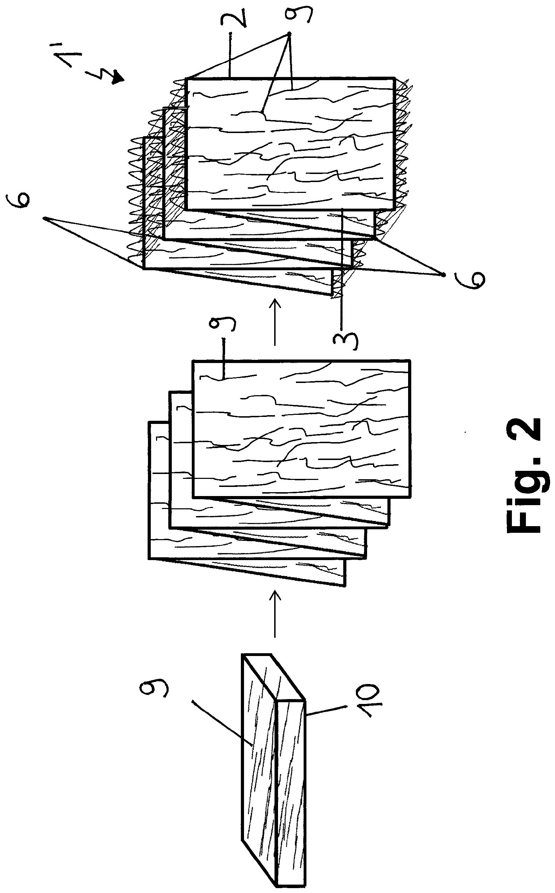

Fig. 2 zeigt in der mittleren und rechten Ansicht ein elektrisch leitfähiges Flächengebilde 1', umfassend einen Grundkörper 2, enthaltend Fasern 9, wobei mindestens ein Teil der Fasern 9 Karbonfasern aufweist. Im Grundkörper 2 sind Kanäle 3 ausgebildet.

Alle Fasern 9 sind karbonisiert.

Die Kanäle 3 sind im Querschnitt dreieckförmig.

Das Flächengebilde 1' zeigt einen Kanaldurchmesser von 50 μm.

Ferner umfasst der Grundkörper 2 eine erste Frontalebene 4 und eine zweite Frontalebene 5, wobei die Kanäle 3 mit den Frontalebenen 4, 5 einen spitzen Winkel bilden. In diesem konkreten Fall beträgt der Winkel weniger als 10 °.

Weiterhin weist das Flächengebilde 1' eine faltenartige Struktur, wobei deren Faltenränder 6 auf beiden Seiten durch Vermaschen und Verschlingen der Fasern 9 des Faserflors 10 miteinander verbunden sind. Das Vermaschen und Verschlingen erfolgt parallel zu den Frontalebenen 4, 5.

Das Verbinden der Faltenränder 6 auf beiden Seiten des Grundkörpers 2 erfolgt durch Verwirken, Verweben und/oder Verfestigung miteinander. Die Faltenränder 6 sind durch Nadelverfestigung auf beiden Seiten der Frontalebenen 4, 5 miteinander verbunden.

Das Flächengebilde 1' zeigt eine Dicke von 10 mm und eine Porosität von 60 %, sowie eine elektrische Leitfähigkeit von 200 S/cm$^2$ senkrecht zu Deckebenen 7, 8, welche orthogonal zu den Frontalebenen 4, 5 angeordnet sind.

Das Flächengewicht des Flächengebildes 1' beträgt 800 g/m$^2$.

Ferner ist das Flächengebilde 1' durch ein Faltenbildungsverfahren hergestellt worden, in diesem konkreten Fall durch ein OptiKnit®-Maschenbildungsverfahren.

Die Herstellung des elektrisch leitfähigen Flächengebildes 1' gemäß Figur 2 umfasst die folgenden Verfahrensschritte:

> a) Bereitstellen eines Faserflors 10 ,
> b) Vorverfestigen des Faserflors 10,
> c) Erzeugen einer faltenartigen Struktur, sowie Verbinden von Faltenrändern 6 unter Ausbildung des Flächengebildes 1', und
> d) Karbonisieren und/oder Graphitisieren des Flächengebildes 1'.

Der Faserflor 10 wird mittels eines Niederdruck-Wasserstrahlverfahrens vorverfestigt. Die Wasserstrahlverfestigung findet bei Temperaturen im Bereich von 10 bis 40 °C statt. Die Fasern 9 des Faserflors 10 sind senkrecht zu den Frontalebenen 4, 5 angeordnet.

Die Karbonisierung und/oder Graphitisierung erfolgt unter Schutzgasatmosphäre bei 800 bis 2500 °C.

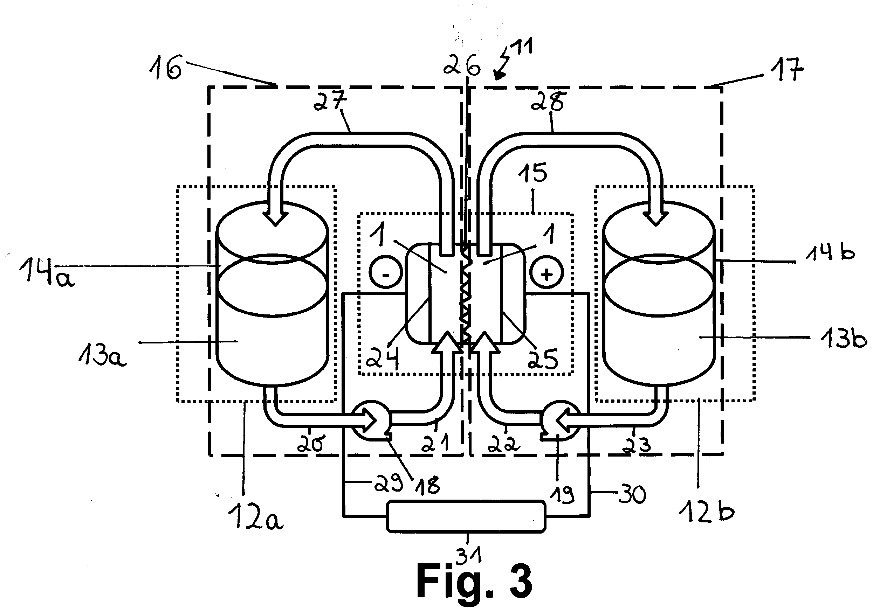

Fig. 3 zeigt die Verwendung des Flächengebildes 1 in einer Redox-Flow-Zelle 11. Die Redox-Flow-Zelle 11 besteht aus äußeren Bereichen 12a, b, in denen die Elektrolytlösungen 13a, b in Tanks bzw. Behältern 14a, b aufbewahrt werden, und einer elektrolytischen Zelle 15.

Die Lagerung der Elektrolytlösungen 13a, b erfolgt in getrennten Behältern 14a, b außerhalb der elektrolytischen Zelle 15, wobei die beiden energiespeichernden Elektrolytlösungen 13a, b in zwei getrennten Elektrolytkreisläufen 16, 17 zirkulieren. Die Behälter 14a, b werden manuell oder maschinell mit Elektrolytlösung 13a, b befüllt.

Die jeweiligen reaktiven Elektrolytlösungen 13a, b werden mittels Pumpen 18, 19 durch Leitungen 20, 21, 22, 23 zur elektrolytischen Zelle 15 befördert, um eine Umwandlung elektrochemischer Energie, nämlich ein Laden bzw. Entladen, zu ermöglichen.

Die elektrolytische Zelle 15 umfasst die beiden Halbzellen 24 und 25. Zwischen der positiven Halbzelle 25 und der negativen Halbzelle 24 ist eine Membran 26 angeordnet, die ein Vermischen der beiden Elektrolytlösungen 13a, b verhindert und für einen Ladungsausgleich sorgt. Während des Speichervorgangs erfolgt in der positiven Halbzelle 25 die Reduktion und in der negativen Halbzelle 24 findet die Oxidation statt. Während des Speichervorgangs fließen Elektronen von der positiven Halbzelle 25 zur negativen Halbzelle 24, wobei beim Entladen der Elektronenfluss in umgekehrter Richtung stattfindet. Die positive Halbzelle 25 und die negative Halbzelle 24 umfassen je ein Flächengebilde 1. Die geladenen Elektrolytlösungen 13a, b werden aus der positiven Halbzelle 25 und der negativen Halbzelle 24 über die Leitungen 27, 28 in die beiden Behälter 14a, b befördert.

Eine Elektrolytlösung 13a, b besteht generell aus einem in Lösungsmittel gelösten Salz. In diesem Fall wird eine Vanadium/Vanadium-Elektrolytlösung 13a, b verwendet. Während des Ladevorgangs wird das Divanadyl-Kation (VO$_2^+$) durch Reduktion des Vanadylkations (VO$^{2+}$) gebildet. Bei der Oxidation wird das Vanadylkation zu Vandiumpentoxid (V$_2$O$_5$) umgesetzt.

Die Membran 26 ist entweder mikroporös ausgestaltet und alle Ionen können die Membran 26 passieren, oder es handelt sich um eine selektive Anionen- oder Kationenaustauschermembran. Die Membran 26 verhindert ein Vermischen der beiden Elektrolytlösungen 13a, b.

Die positive Halbzelle 25 und die negative Halbzelle 24 sind über elektrische Leitungen 29, 30 mit der elektrischen Quelle bzw. Senke 31 verbunden.

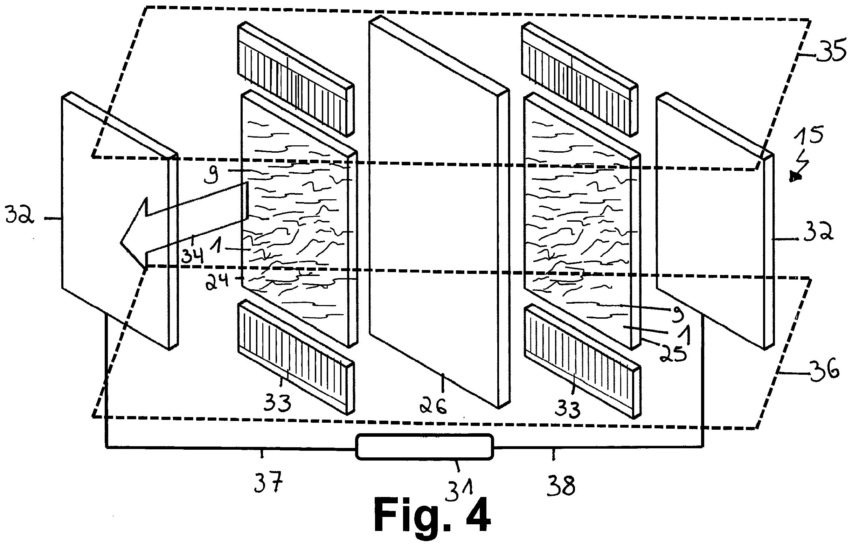

Fig. 4 zeigt eine schematische Anordnung einer elektrolytischen Zelle 15, die ein Flächengebilde 1 und eine elektrische Quelle 31 umfasst, wobei zwischen einer ersten Halbzelle 24 und einer zweiten Halbzelle 25 eine Leitungsrichtung besteht, längs derer die Fasern 9 ausgerichtet sind.

In diesem konkreten Fall sind die Fasern 9 parallel zu den Grundebenen 35, 36 angeordnet, wobei die Halbzellen 24, 25 orthogonal zu den Grundebenen 35, 36 ausgerichtet sind. Diese Zelle 15 umfasst zwei Bipolarplatten 32. Diese stellen den elektrischen Kontakt über die elektrischen Leitungen 37, 38 mit der elektrischen Quelle bzw. der Senke 31 gemäß Figur 3 im elektrischen Kreis her.

Zwischen den Bipolarplatten 32 sind eine positive Halbzelle 25 und eine negative Halbzelle 24 angeordnet, die je ein Flächengebilde 1 aufweisen. Die Elektrolytlösungen 13a, b fließen durch die beiden Halbzellen 24, 25.

Durch das Anlegen eines elektrischen Feldes 33 an den beiden Halbzellen 24, 25 findet der Elektronenfluss 34 statt. Die Richtung des elektrischen Feldes bestimmt die Richtung des Elektronenflusses 34.

Die Halbzellen 24, 25 werden durch eine Membran 26 oder einen Separator voneinander getrennt. Als Membran 26 wird eine Ionenaustauschzelle verwendet, wobei diese für einen Ladungsausgleich sorgt.

**Patentansprüche**

1. Elektrisch leitfähiges Flächengebilde (1, 1', 1 "), umfassend einen Grundkörper (2), enthaltend Fasern (9), wobei mindestens ein Teil der Fasern (9) Karbonfasern aufweist, wobei Kanäle (3) im Grundkörper (2) vorliegen, **gekennzeichnet durch** eine faltenartige Struktur, deren Faltenränder (6) zumindest teilweise durch Verwirken, Verweben und/oder Nadelverfestigung miteinander verbunden sind.

2. Flächengebilde nach Anspruch 1, **gekennzeichnet durch** einen Kanaldurchmesser im Bereich von 1 bis 500 $\mu$m.

3. Flächengebilde nach Anspruch 1 oder 2, **dadurch gekennzeichnet, dass** der Grundkörper (2) eine erste und eine zweite Frontalebene (4a, 5a) umfasst, wobei die Kanäle (3) orthogonal zu den Frontalebenen (4a, 5a) angeordnet sind.

4. Flächengebilde nach Anspruch 1 oder 2, **dadurch gekennzeichnet, dass** der Grundkörper (2) eine erste und eine zweite Frontalebene (4, 5) umfasst, wobei die Kanäle (3) mit den Frontalebenen (4, 5) einen spitzen Winkel bilden.

5. Flächengebilde nach einem der vorhergehenden Ansprüche, **dadurch gekennzeichnet, dass** das Flächengebilde (1, 1', 1") plissiert und zu einem Block zusammengefaltet ist.

6. Flächengebilde nach einem der vorhergehenden Ansprüche, **gekennzeichnet durch** eine Dicke von 1 bis 15 mm.

7. Flächengebilde nach einem der vorhergehenden Ansprüche, **gekennzeichnet durch** eine Porosität von 40 bis 95 %.

8. Flächengebilde nach einem der vorhergehenden Ansprüche, **gekennzeichnet durch** eine elektrische Leitfähigkeit von 10 bis 300 S/cm$^2$ senkrecht zu Deckebenen (7, 8), welche orthogonal zu den Frontalebenen (4, 4a, 5, 5a) angeordnet sind.

9. Flächengebilde nach einem der vorhergehenden Ansprüche, **gekennzeichnet durch** ein Flächengewicht von 100 bis 1000 g/m$^2$.

10. Flächengebilde nach einem der vorhergehenden Ansprüche, hergestellt durch ein Faltenbildungsverfahren.

11. Verwendung eines Flächengebildes nach einem der vorhergehenden Ansprüche als Redox-Flow-Elektrode, in Lithium-Metall-Polymer-Batterien, Lithium-Ionen-Batterien, Doppelschichtkondensatoren und/oder als Gasdiffusionsschicht.

12. Verfahren zur Herstellung eines elektrisch leitfähigen Flächengebildes (1, 1', 1") nach einem der Ansprüche 1 bis 10, umfassend die folgenden Verfahrensschritte:

   a) Bereitstellen mindestens eines Faserflors (10),
   b) Vorverfestigen des Faserflors (10),
   c) Erzeugen einer faltenartigen Struktur, sowie Verbinden von Faltenrändern (6) unter Ausbildung des Flächengebildes (1, 1', 1"), und
   d) Karbonisieren und/oder Graphitisieren des Flächengebildes (1, 1', 1").

13. Verfahren zur Herstellung eines elektrisch leitfähigen Flächengebildes (1, 1', 1") nach einem der Ansprüche 1 bis 10, umfassend die folgenden Verfahrensschritte:

   a) Bereitstellen mindestens zweier Faserflore, wobei die Faserorientierungen der Faserflore unterschiedliche Vorzugsrichtungen aufweisen,
   b) Übereinanderlegen der Faserflore zur Erzeugung eines Verbunds,
   c) Vorverfestigen der Faserflore,
   d) Erzeugen einer faltenartigen Struktur, sowie Verbinden von Faltenrändern (6) unter Ausbildung des Flächengebildes (1, 1', 1"), und
   e) Karbonisieren und/oder Graphitisieren des Flächengebildes (1, 1', 1").

14. Verfahren zur Herstellung eines elektrisch leitfähigen Flächengebildes (1, 1', 1") nach Anspruch 12 oder 13, **dadurch gekennzeichnet, dass** die Ausrüstung des Flächengebildes (1, 1', 1") durch Funktionalisierung, Beschichtung und/oder Imprägnierung erfolgt.

## Claims

1. Electrically conductive sheet material (1, 1', 1") comprising a main body (2) comprising fibers (9), wherein the fibers (9) comprise carbon fibers in part at least, wherein channels (3) are present in the main body (2), **characterized by** a fold-type structure, the fold edges (6) of which are at least partially interconnected by knitting, weaving and/or needle consolidation.

2. Sheet material according to Claim 1, **characterized by** a channel diameter in the range from 1 to 500 $\mu$m.

3. Sheet material according to Claim 1 or 2, **characterized in that** the main body (2) comprises a first and a second frontal plane (4a, 5a), wherein the channels (3) are orthogonal to the frontal planes (4a, 5a).

4. Sheet material according to Claim 1 or 2, **characterized in that** the main body (2) comprises a first and a second frontal plane (4, 5), wherein the channels (3) form an acute angle with the frontal planes (4, 5).

5. Sheet material according to any preceding claim, **characterized in that** the sheet material (1, 1', 1") is pleated sheet material and has been folded together into a block.

6. Sheet material according to any preceding claim, **characterized by** a thickness of 1 to 15 mm.

7. Sheet material according to any preceding claim, **characterized by** a porosity of 40 to 95%.

8. Sheet material according to any preceding claim, **characterized by** an electrical conductivity of 10 to 300 S/cm$^2$ perpendicularly to end planes (7, 8), which are orthogonal to the frontal planes (4, 4a, 5, 5a).

9. Sheet material according to any preceding claim, **characterized by** a basis weight of 100 to 1000 g/m$^2$.

10. Sheet material according to any preceding claim, obtained via a fold-forming method.

11. Use of a sheet material according to any preceding claim as a redox flow electrode, in lithium-metal-polymer batteries, lithium-ion batteries, double layer capacitors and/or as a gas diffusion layer.

12. Method of forming an electrically conductive sheet material (1, 1', 1") according to any of Claims 1 to 10, comprising the steps of:

a) providing at least one fibrous web (10),
b) preconsolidating the fibrous web (10),
c) creating a fold-type structure and interconnecting fold edges (6) to produce the sheet material (1, 1', 1"), and
d) carbonizing and/or graphitizing the sheet material (1, 1', 1").

13. Method of forming an electrically conductive sheet material (1, 1', 1") according to any of Claims 1 to 10, comprising the steps of:

a) providing at least two fibrous webs such that the fiber orientations of the fibrous webs have different preferential directions,
b) superposing the fibrous webs to create an ensemble,
c) preconsolidating the fibrous web,
d) creating a fold-type structure and interconnecting fold edges (6) to produce the sheet material (1, 1', 1"), and
e) carbonizing and/or graphitizing the sheet material (1, 1', 1").

14. Method of forming an electrically conductive sheet material (1, 1', 1") according to Claim 12 or 13, **characterized in that** the sheet material (1, 1', 1") is finished by functionalization, coating and/or impregnation.

## Revendications

1. Produit plat (1, 1', 1") électriquement conducteur, comprenant un corps de base (2), contenant des fibres (9), au moins une partie des fibres (9) présentant des fibres de carbone, des canaux (3) étant présents dans le corps de base (2), **caractérisé par** une structure de type plissée dont les bords de plis (6) sont raccordés les uns aux autres au moins partiellement par tricotage, tissage et/ou consolidation par aiguilles.

2. Produit plat selon la revendication 1, **caractérisé par** un diamètre de canaux dans la plage de 1 à 500 $\mu$m.

3. Produit plat selon la revendication 1 ou 2, **caractérisé en ce que** le corps de base (2) comprend un premier et un deuxième plan frontal (4a, 5a), les canaux (3) étant disposés à angle droit avec les plans frontaux (4a, 5a).

4. Produit plat selon la revendication 1 ou 2, **caractérisé en ce que** le corps de base (2) comprend un premier et un deuxième plan frontal (4, 5), les canaux (3) formant un angle aigu avec les plans frontaux (4, 5).

**5.** Produit plat selon l'une des revendications précédentes, **caractérisé en ce que** le produit plat (1, 1', 1") est plissé et replié en un bloc.

**6.** Produit plat selon l'une des revendications précédentes, **caractérisé par** une épaisseur de 1 à 15 mm.

**7.** Produit plat selon l'une des revendications précédentes, **caractérisé par** une porosité de 40 à 95 %.

**8.** Produit plat selon l'une des revendications précédentes, **caractérisé par** une conductivité électrique de 10 à 300 S/cm$^2$ perpendiculairement à des plans de couverture (7, 8) qui sont disposés à angle droit avec les plans frontaux (4, 4a, 5, 5a).

**9.** Produit plat selon l'une des revendications précédentes, **caractérisé par** une masse surfacique de 100 à 1 000 g/m$^2$.

**10.** Produit plat selon l'une des revendications précédentes, fabriqué par un procédé de formation de plis.

**11.** Utilisation d'un produit plat selon l'une des revendications précédentes en tant qu'électrode à flux redox dans des batteries lithium-métal-polymère, des batteries lithium-ion, des condensateurs à double couche et/ou en tant que couche de diffusion gazeuse.

**12.** Procédé de fabrication d'un produit plat (1, 1', 1") électriquement conducteur selon l'une des revendications 1 à 10, comprenant les étapes de procédé suivantes :

a) fourniture d'au moins une nappe de fibres (10),
b) pré-consolidation de la nappe de fibres (10),
c) production d'une structure de type plissée, ainsi que raccordement de bords de plis (6) avec formation du produit plat (1, 1', 1"), et
d) carbonisation et/ou graphitisation du produit plat (1, 1', 1").

**13.** Procédé de fabrication d'un produit plat (1, 1', 1") électriquement conducteur selon l'une des revendications 1 à 10, comprenant les étapes de procédé suivantes :

a) fourniture d'au moins deux nappes de fibres, les orientations des fibres des nappes de fibres présentant différentes directions préférentielles,
b) superposition des nappes de fibres pour produire un composite,
c) pré-consolidation des nappes de fibres,
d) production d'une structure de type plissée, ainsi que raccordement de bords de plis (6) avec formation du produit plat (1, 1', 1"), et

e) carbonisation et/ou graphitisation du produit plat (1, 1', 1").

**14.** Procédé de fabrication d'un produit plat (1, 1', 1") électriquement conducteur selon la revendication 12 ou 13, **caractérisé en ce que** l'apprêt du produit plat (1, 1', 1") s'effectue par fonctionnalisation, revêtement et/ou imprégnation.

**Fig. 1**

Fig. 1a

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 4632043 B
- JP 2003308851 A
- JP 2001085028 A
- DE 10050512 A1
- FR 2592404 A1
- JP 2004131855 A